# EUROPÄISCHE PATENTANMELDUNG

(11) **EP 3 145 024 A1**
(43) Veröffentlichungstag der Anmeldung: **22.03.2017**
(21) Anmeldenummer: 16185647.1
(22) Anmeldetag: 25.08.2016
(51) Int. Cl.: H01Q 1/22, H01Q 1/42, H02B 1/32, H02B 1/38, H02B 1/50, H05K 5/00

(54) **ANTENNEN-DACHMODUL, ANTENNEN-NACHRÜSTSATZ FÜR VERTEILERSCHRÄNKE SOWIE BAUKASTEN ZUM ERSTELLEN VON VERTEILERSCHRÄNKEN**

(30) Priorität: 17.09.2015 DE 102015115688
(71) Anmelder: Berthold Sichert GmbH, 12277 Berlin (DE)
(72) Erfinder: Julian, Graf von Hardenberg, 16775 Löwenberger Land (DE)
(74) Vertreter: Weickmann & Weickmann PartmbB

(57) **Zusammenfassung**

Zum Nachrüsten eines Verteilerschrankes mit einer Antenne, insbesondere LTE-Antenne, wird erfindungsgemäß vorgeschlagen, für den häufig benötigten Fall der Nachrüstung eines bereits existierenden und im Betrieb befindlichen Verteilerschrankes, dessen Dachmodul abzunehmen und durch ein Antennen-Dachmodul **(10)** zu ersetzen, welches zumindest die Antenne enthält, vorzugsweise auch die Antennen-Elektronik. Dabei ist ein Aspekt, dass trotz des gegen ein Antennen-Dachmodul **(10)** ausgewechselten normalen Dachmoduls die kubische, glattflächige Form des Verteilerschrankes erhalten bleibt, so dass zum Einen für den Laien kaum erkennbar ist, dass sich nun auch eine Antenne im Inneren des Verteilerschrankes befindet, und vor Allem werden keine optischen Anreize in Form von aus dieser kubischen Form vorspringenden Bauelementen hinsichtlich Vandalismus geboten. Um die unterschiedlichsten Verteilerschränke damit nachrüsten zu können, wird das passende Antennen-Dachmodul **(10)** vorzugsweise aus einem Antennen-Nachrüst-Baukasten zusammengestellt, um mit wenigen Einzelteilen eine hohe Variabilität an Antennen-Dachmodulen herstellen zu können.

## Beschreibung

Die Erfindung betrifft ein Antennen-Dachmodul mit einem Dachmodul-Gehäuse und einer darin untergebrachten Antenne, etwa einer Mobilfunkantenne.

### II. Technischer Hintergrund

Um ein lückenloses Funknetz zu schaffen, hängt die Anzahl der dafür benötigten Antennen einerseits von deren Reichweite ab und andererseits davon, wie günstig oder ungünstig diese Antennen positioniert sind, um innerhalb ihres Reichweiten-Bereiches auch möglichst alle Punkte bestrahlen zu können, was insbesondere in Städten und tiefen Häuserschluchten Schwierigkeiten bereitet.

Mobilfunkantennen werden zu diesem Zweck heute im städtischen Bereich in der Regel möglichst hoch liegend auf Hausdächern oder Türmen, Schloten und anderen hoch liegenden Punkten montiert, und besitzen eine Reichweite von mehreren hundert Metern bis zu mehreren Kilometern.

Für die Montage an solchen hoch liegenden Punkten ist jedoch ein sehr hoher Montageaufwand erforderlich, und auch im Falle von Reparaturen und Wartungsarbeiten ist der Aufwand hoch, ganz abgesehen von der Notwendigkeit, hierfür das Einverständnis einerseits vom Gebäudebesitzer und andererseits von der zuständigen Kommune zu erhalten, was das Errichten von Funknetzen zusätzlich verzögert.

Die an solchen exponierten Lagen montierten Antennen müssen extrem witterungsbeständig und daher gut geschützt in entsprechenden Gehäusen untergebracht sein, und sind wegen ihrer großen Reichweite sehr teuer.

Dennoch kann innerhalb des Reichweitenbereiches einer solchen Mobilfunkantenne gerade an tiefliegenden Positionen, also auf der Straße oder in Gebäuden, die Empfangsstärke oftmals unbefriedigend sein. Nicht zuletzt deshalb müssen die Antennen so positioniert werden, dass sich ihre Reichweiten überdecken.

Zum Errichten eines neuen Funknetzes, beispielsweise nach LTE-Standard, müssten nach dieser Methode sehr viele hoch liegende Antennen in kurzer Zeit montiert werden und in Betrieb genommen werden, was angesichts der bereits häufig vollen Belegung eines Antennenstandpunktes bzw. eines Antennenmastes zusätzlich zum hohen Investitionsaufwand sehr schwierig sein kann.

Funknetz-Betreiber, insbesondere Telekommunikationsfirmen, die gleichzeitig Festnetze betreiben, besitzen für den Betrieb der Festnetze eine Vielzahl von bereits bestehenden Festnetz-Verteilerschränken, die meist auf öffentlichem Grund stehen oder auch auf Privatgrund, und die über zugeführte Erdkabel nicht nur mit den notwendigen Festnetz-Signalen versorgt werden, sondern auch mit Strom, da sie sehr häufig auch aktive elektrische Bauteile enthalten.

Für Festnetzbetreiber kann es daher eine kostengünstigere und auch schneller zu realisierende Möglichkeit sein, an diesen auf dem Boden stehenden sowohl über Signalleitungen als auch über Stromanschlüsse versorgten Festnetz-Verteilerschränken zusätzlich eine - dann relativ tief angeordnete - Mobilfunkantenne anzuordnen, beispielweise eine LTE-Antenne, um ein LTE-Funknetz flächendeckend aufzubauen.

Bei dieser Vorgehensweise ergeben sich unterschiedliche Vorteile und Nachteile:
Die Vorteile bestehen darin, dass bei Einhaltung bestimmter Randbedingungen keine neuen Aufstellgenehmigungen weder seitens der Kommune noch seitens eines möglicherweise privaten Grundeigentümers benötigt werden, und sowohl der Montageaufwand als auch die Zugänglichkeit zu einer solchen neuen Antenne sehr günstig sind. Zusätzlich können Antennen mit geringer Leistung verwendet werden, da sich die Festnetz-Verteilerschränke in der Regel in einem geringen Abstand zueinander befinden.

Ein weiterer Vorteil besteht darin, dass bei entsprechender Gestaltung des Gehäuses die benötigte Antenne nicht nur eine begrenzte Leistung benötigt, sondern zusätzlich auch Indoor-Antennen hierfür verwendet werden können, die besonders preisgünstig sind, sofern ein ausreichender Schutz durch das umgebende Gehäuse gewährleistet ist.

Die Nachteile bestehen darin, dass zum einen eine Vielzahl solcher Nachrüst-Antennen montiert werden muss, im Vergleich zu den Anschaffungs-, Montage- und Genehmigungskosten der wenigeren, aber sehr viel leistungsstärkeren üblichen Mobilfunkantennen ist dies jedoch dennoch die finanziell meist günstigere Lösung.

Beim Betrieb von Funkantennen müssen zusätzlich Immissionswerte der Funkstrahlung für die in der Umgebung sich befindenden Menschen eingehalten werden:
Abhängig von der Sendeleistung und Abstrahlcharakteristik einer solchen Antenne muss beispielsweise sichergestellt sein, dass innerhalb eines Nahbereiches um die Antenne herum Menschen sich nicht dauerhaft im Abstrahlbereich der Antenne aufhalten können.

### III. Darstellung der Erfindung

### a) Technische Aufgabe

Es ist daher die Aufgabe gemäß der Erfindung, eine Lösung zur Verfügung zu stellen, welche sowohl die Nachrüstung von bestehenden Verteilerschränken mit diesem Antennen-Modul erlaubt als auch das Verwenden dieses Antennenmoduls bei der Herstellung neuer Verteilerschränke.

### b) Lösung der Aufgabe

Diese Aufgabe wird durch die Merkmale der Ansprüche **1, 11** und **20** gelöst. Vorteilhafte Ausführungsformen ergeben sich aus den Unteransprüchen.

Diese Aufgabe wird durch den Grundgedanken gelöst, die gewünschte eine oder mehrere Antennen im Dachbereich eines Verteilerschrankes unterzubringen.

Dabei geht es primär um die Nachrüstung von bereits bestehenden und im Betrieb befindlichen Verteilerschränken, aber auch die Neuerstellung von Verteilerschränken, und in diesem Zuge mit der gewünschten Antennenausstattung.

Hierfür wird erfindungsgemäß ein Antennen-Dachmodul mit einem Dachmodul-Gehäuse - und ggfs. darin bereits untergebrachter Antenne - zur Verfügung gestellt, welches wegen der benötigten Stückzahl einfach, kostengünstig und dennoch haltbar und zerstörungssicher aufgebaut sein muss und darüber hinaus leicht montierbar und demontierbar sein muss, was sowohl für das Dachmodul-Gehäuse als auch die Antenne darin gilt.

Darüber hinaus wird erfindungsgemäß ein Antennen-Nachrüst-Baukasten zur Verfügung gestellt, um ein solches Antennen-Dachmodul an nicht nur einer einzigen Bauform eines Festnetz-Verteilerschrankes, sondern an unterschiedlichen Modellen unterschiedlicher Hersteller und in unterschiedlichen Ausbaustufen montieren zu können, und dabei die für die jeweiligen örtlichen Verhältnisse optimale Antennen-Ausstattung wählen zu können.

Dabei ist zu berücksichtigen, dass die häufig über viele Jahrzehnte aufgebauten und schrittweise erneuerten Festnetz-Funknetze eines Betreibers tausende von Verteilerschränken umfassen, die nicht identisch sind, sondern je nach Anschaffungszeitpunkt und Montageposition unterschiedliche Modelle desselben Verteilerschrank-Herstellers sein können oder auch von unterschiedlichen Verteilerschrank-Herstellern stammen können, und darüber hinaus in unterschiedlichen Ausbaustufen hinsichtlich ihrer Größe und elektrischen Innenausstattung vorliegen können. Das daran anzuordnende Antennen-Dachmodul soll jedoch mit möglichst geringem Montageaufwand unabhängig vom vorhandenen Modell des Verteilerschrankes daran montiert werden können.

In diesem Zusammenhang wird erfindungsgemäß auch ein Antennenschrank-Baukasten zur Verfügung gestellt, der außer dem Antennen-Nachrüst-Baukasten einen Verteilerschrank-Baukasten umfasst, so dass damit Verteilerschränke inklusive einer Antenne in unterschiedlicher Größe und Ausstattung und insbesondere mit unterschiedlicher Antennenausstattung in großer Vielfalt aus einer sehr begrenzten Anzahl von Einzelteilen hergestellt werden können.

Solche - bestehenden als auch neuen - Verteilerschränke sind in der Regel kubusförmig, stehen auf öffentlichem Grund, etwa an Straßenrändern oder Gehsteigen, oder auch auf privatem Grund, aber fast immer im Freien, und besitzen häufig eine Höhe zwischen **1** und **2** Metern bei einer Breite zwischen **0,5** m und **3** m, meist bei einer Tiefe von **30** cm bis **50** cm.

Diese Verteilerschränke besitzen eine Außenhaut, meist in Form einer Außen-Beplankung, die aus Kunststoff oder Metall besteht, relativ glattflächig ist und wenig Ansatzpunkte für Vandalismus - bis auf Bemalen und Bekleben - bietet.

Der eine Aspekt der Erfindung besteht darin, diese glattflächige, etwa kubus-förmige Gesamtgestalt der bekannten Verteilerschränke beizubehalten und für die Zwecke der Unterbringung der Antenne kein aus dieser Kubusform vorstehendes Bauteil anzuordnen, welches rein optisch einen Anreiz für Vandalismus bietet, aber auch unabsichtlich leichter beschädigt werden kann als ein glattflächig kubusförmiges Gehäuse eines Verteilerschrankes.

Der andere Aspekt der Erfindung besteht darin, dass im Rahmen der Möglichkeiten die Antenne möglichst hoch liegend angeordnet werden soll, was bei Unterbringung in einem Verteilerschrank bedeutet, dass sie im Dachbereich des Innenraumes angeordnet werden soll.

Das Antennen-Dachmodul, in dessen Innenraum die Antenne angeordnet wird, ist daher so ausgebildet, also dimensioniert und mit den entsprechenden Arretier-Vorrichtungen versehen, dass es sehr einfach auf einem üblichen Verteilerschrank, dessen Dachelement oder Dachmodul entfernt wurde oder bei Neuerstellung noch gar nicht vorhanden ist - welcher also oben offen ist - auf diesen aufgesetzt und mit diesem Verteilerschrank auf schnelle und einfache Art und Weise verbunden werden kann.

Dies wird erreicht, indem das Antennen-Dachmodul ein Dachmodul-Gehäuse aufweist, welches an der unteren Seite offen ist oder zumindest eine Öffnung aufweist, während es nach oben durch ein Dachelement und zu den Seiten hin durch Wandelemente mehr oder weniger - je nach Anwendungsfallgeschlossen ist.

In diesem Antennen-Dachmodul soll die Antenne angeordnet werden - natürlich an einem möglichst hoch liegenden Punkt innerhalb des DachmodulGehäuses -, und zwar montiert auf der Oberseite einer Montageplatte, die im Inneren des Dachmodul-Gehäuses untergebracht ist. Hierfür ist eine Fixiervorrichtung vorhanden, um die Montageplatte - nach Aufsetzen der Antenne auf die Montageplatte - von unten an die Öffnung des Dachmodul-Gehäuses heranzuführen oder durch die Öffnung in das oder Dachmodul-Gehäuse einzuführen und gegenüber dem Dachmodul-Gehäuse zu fixieren.

Das Dachmodul-Gehäuse besteht dabei im Wesentlichen aus für Funkwellen durchlässigem Material, insbesondere Kunststoff, und der Antennenraum oberhalb der Montageplatte, also zwischen Montageplatte und Dachelement des Dachmodul-Gehäuses, muss groß genug sein, um die gewünschte Antenne darin unterzubringen und gegebenenfalls zusätzlich ein Abschirmelement, wie etwa ein Abschirmblech, um eine Abstrahlung der Antenne in bestimmte Raumrichtungen zu verhindern oder zumindest zu dämpfen.

Ferner weist das Antennen-Dachmodul eine Arretier-Vorrichtung auf, vorzugsweise am Dachmodul-Gehäuse, um das Antennen-Dachmodul, insbesondere dessen Dachmodul-Gehäuse, an einem darunter angeordneten Bauteil, insbesondere eben dem erwähnten Verteilerschrank, der kein Dach besitzt, arretieren zu können.

Dadurch ist es möglich, das vorgefertigte Antennen-Dachmodul - vorzugsweise bereits ausgestattet mit Antenne und Antennen-Elektronik - sehr einfach auf der offenen Oberseite eines Verteilerschrankes aufzusetzen, zu arretieren und die Antenne und die für den Betrieb der Antenne benötigte Antennen-Elektronik über eine im Inneren des Verteilerschrankes angeordnete Stromzuführung mit Strom zu versorgen und zu betreiben.

Die Arretier-Vorrichtung besteht insbesondere in von dem DachmodulGehäuse nach unten vorstehenden Arretier-Zapfen, die vorzugsweise in den Eckbereichen des Dachmodul-Gehäuses angeordnet sind.

Zum Arretieren gegenüber dem Verteilerschrank werden diese ArretierZapfen in entsprechende Arretier-Öffnungen des Verteilerschrankes, insbesondere dessen Gehäuse, eingesteckt und dort arretiert, meist lediglich durch Einstecken eines Arretier-Querbolzens durch eine Arretier-Bohrung im Arretier-Zapfen sowie eine damit fluchtende Bohrung im Verteilerschrank, was sehr viel schneller von statten geht als ein Verschrauben.

Dieses Arretieren erfolgt vom Innenraum des Verteilerschrankes her, so dass nach Schließen und Absperren der Türen des Verteilerschrankes diese Arretierung von außen nicht gelöst werden kann.

Vorzugsweise besitzt das Dachmodul-Gehäuse in der Aufsicht betrachtet die gleiche Gestalt und Abmessung wie das Gehäuse des Verteilerschrankes, so dass die Außenflächen der Wandelemente des Dachmodul-Gehäuses mit den Außenflächen des Verteilerschrank-Gehäuses fluchten und die glattflächige Kubusform eines üblichen Verteilerschrankes beibehalten wird und insbesondere nach außen für den Laien nicht ersichtlich ist, dass in diesem Verteilerschrank eine Funk-Antenne mit der entsprechenden AntennenElektronik untergebracht ist, da er lediglich die Höhe des Verteiler Schrankes durch das neue Dachmodul etwas höher geworden ist.

Als Fixiervorrichtung zum Fixieren der Montageplatte in dem DachmodulGehäuse ist vorzugsweise an dem Dachmodul-Gehäuse, insbesondere an einem oder mehreren seiner Wandelemente, ein nach innen ragender Anschlag vorgesehen, gegen den die Montageplatte von der Unterseite her herangeführt und an der Unterseite dieses Anschlages anliegend fixiert werden kann, vorzugsweise gegenüber dem Anschlag gezielt werden kann.

Dadurch muss für das Einbauen oder auch Auswechseln der Antenne das Dachmodul-Gehäuse nicht zerlegt werden, und kann insbesondere aus einem einstückigen Spritzgussteil bestehen, vorzugsweise jedoch auch nach Art eines Baukastens aus einzelnen, gegebenenfalls unterschiedlich großen, Wandelementen und Dachelementen je nach der gewünschten Größe zusammengesetzt werden.

Die für das Betreiben der Antenne notwendige Antennen-Elektronik kannals eine Möglichkeit - ebenfalls in dem Dachmodul-Gehäuse untergebracht sein, und dann ist eine entsprechende Befestigungsvorrichtung notwendig, um die Antennen-Elektronik an der gewünschten Position innerhalb des Dachmodul-Gehäuses zu befestigen, sei es auf der Oberseite der Montageplatte abseits der Antenne, oder an der Unterseite der Montageplatte.

Die Befestigungsvorrichtungen an der Montageplatte sowohl zum Befestigen der Antenne als auch zum Befestigen der Antennen-Elektronik können in einem sehr einfachen Fall lediglich aus einem bestimmten Muster von Durchgangsbohrungen durch die Montageplatte bestehen, welches mit in der Antennen-Elektronik und/oder der Antenne vorhandenen Befestigungsöffnungen korrespondiert.

Die Wandelemente des Dachmodul-Gehäuses können ferner - vorzugsweise in ihrem unteren Höhenbereich - Durchgangsöffnungen als Luftdurchtritts-Öffnungen aufweisen, damit der Innenraum des Dachmodul-Gehäuses beund entlüftet wird. Vorzugsweise sind diese Luftdurchtritts-Öffnungen als Kiemen-Öffnungen ausgebildet, was bedeutet, dass sich oberhalb der einzelnen Öffnungen eine Art Vordach von dem Wandelement schräg nach außen unten erstreckt, so dass das Eindringen von Regen oder Schnee oder Schmutz in die Luftdurchtritts-Öffnung zumindest von oben her weitestgehend vermieden wird.

In diesem Fall befindet sich die Montageplatte im montierten Zustand oberhalb dieser Durchtritts-Öffnungen, so dass nur der Raum unterhalb der Montageplatte hierdurch belüftet wird.

Diese Luftdurchtritts-Öffnungen sind in dem Dachmodul-Gehäuse vorzugsweise dann vorhanden, wenn das Antennen-Dachmodul auf einen Verteilerschrank gesetzt werden soll, in dessen oberen Bereich sich ein sogenanntes Klima-Modul befindet, was ein einfacher Lüfter oder auch mit zusätzlichem Wärmetauscher sein kann, so dass eine Luftströmung im Innenraum des Verteilerschrankes bewirkt wird, wobei die naturgemäß aufsteigende wärmste Luft durch die dann im obersten Bereich des Innenraumes des Verteilerschrankes befindlichen Luftdurchtritts-Öffnungen im Dachmodul-Gehäuse entweichen kann, denn der Innenraum des Verteilerschrankes erstreckt sich ja - bei aufgesetztem Antennen-Dachmodul - bis zu der Montageplatte, die eine im Wesentlichen dichte Abtrennung des Innenraumes zwischen dem unteren Innenraum des Verteilerschrankes und dem darüber liegenden Antennenraum des Antennen-Dachmoduls darstellt.

Das Antennen-Dachmodul kann ferner ein oder mehrere Abschirmelemente, insbesondere Abschirmbleche - montiert insbesondere an der Unterseite des Dachelementes zum Beispiel direkt über der Antenne -, aufweisen, durch welche die von der Antenne abgegebene elektromagnetische Strahlung nicht oder nur reduziert hindurchdringen kann, um eine Abstrahlung oder zu starke Abstrahlung der elektromagnetischen Wellen in bestimmte Richtungen zu minimieren.

Um jeden bestehenden und im Betrieb befindlichen, also bereits voll verkabelten, Verteilerschrank mit einem solchen Antennen-Dachmodul nachrüsten zu können, würden sehr viele verschiedene Antennen-Dachmodule benötigt und vorrätig gehalten werden. Erfindungsgemäß können viele verschiedene Antennen-Dachmodule sehr einfach aus einem Antennen-Nachrüst-Baukasten erstellt werden, bei dem die einzelnen Bauteile des AntennenDachmoduls meist in mehreren unterschiedlichen Sorten zur Auswahl vorhanden sind, um in Anpassung an Bauform, Größe, Hersteller, Innenausstattung etc. des Verteilerschrankes das passende Antennen-Dachmodul herstellen und diesen nachrüsten zu können, indem sein ursprünglich vorhandenes Dachmodul entfernt und stattdessen ein passend aufgebautes Antennen-Dachmodul aufgesetzt wird.

Ein solcher Antennen-Nachrüst-Baukasten kann natürlich auch zur Neuerstellung eines Verteilerschrankes, der ein Antennen-Dachmodul tragen soll, benutzt werden.

Dementsprechend umfasst ein solcher Nachrüst-Baukasten meist mehrere Sorten von Dachmodul-Gehäusen, also beispielsweise mit unterschiedlichem Grundriss in der Aufsicht betrachtet, passend zu den vorhandenen Grundrissen von vorhandenen Verteilerschrank-Gehäusen, mit unterschiedlichen Höhen, mit Seitenwänden mit und ohne Luftdurchtritts-Öffnungen, mit unterschiedlichen Montagepositionen für die horizontal in dem DachmodulGehäuse zu montierende Montageplatte, insbesondere auf unterschiedlichen Höhen, oder mit anderen an den nachzurüstenden Verteilerschrank angepasste Details, wie die Ausführung der Arretier-Vorrichtung, mit der das Dachmodul-Gehäuse auf dem Verteilerschrank arretiert werden soll.

Die verschiedenen Sorten von Dachmodul-Gehäusen können sich ferner auch unterscheiden hinsichtlich der Form ihres Dachelementes, vor allem betrachtet in der Seitenansicht.

Wenn beispielsweise die Montageposition der Antenne in der Aufsicht betrachtet im Zentrum des Dachmodul-Gehäuses liegt, kann das Dachelement von diesem zentralen höchsten Punkt aus nach allen Seiten hin abfallen, was jedoch nicht möglich ist, wenn in dem Dachmodul-Gehäuse zwei Antennen montiert werden, die sich z.B. in der größten Erstreckungsrichtung, der Länge des Grundrisses des Dachmodul-Gehäuses, in den Endbereichen befinden.

Ebenso weist der Nachrüst-Baukasten meist mehrere Sorten von Montageplatten, an denen die wenigstens eine oder die mehreren einzubauenden Antennen montiert werden, auf, insbesondere angepasst an die in der Aufsicht betrachteten Abmessungen der unterschiedlich vorhandenen Dachmodul-Gehäuse. Die Montageplatte kann auch aus mehreren nebeneinander angeordneten Plattenteilen bestehen

Der Innenraum des Dachmodul-Gehäuses soll ja durch die insbesondere von unten eingesetzte Montageplatte in der Höhe unterteilt werden sollen, insbesondere möglichst dicht unterteilt werden, in den darüberliegenden Antennenraum und den darunterliegenden Dachmodul-Raum, der in der Praxis nach unten offen ist und damit mit dem Innenraum des Verteilerschrankes in Verbindung steht.

Wenn sich in den Wandelementen des Dachmodul-Gehäuses Luftdurchtritts-Öffnungen, wie etwa Kiemen-Öffnungen, befinden, dann sind diese in der Regel im unteren Bereich der Wandelemente vorhanden, und die Befestigungsposition für die Montageplatte an den Dachmodul-Wandelementen liegt oberhalb der Luftdurchtritts-Öffnungen, durch die erwärmte Luft aus dem inneren des Verteiler Schrankes nach außen abfließen soll.

Der Nachrüst-Baukasten umfasst ferner wenigstens eine Sorte von Arretier-Vorrichtungen zum Arretieren des Dachmodul-Gehäuses an der Oberseite eines dachlosen Verteiler-Schrankes.

Da hierfür entsprechende Gegenelemente an dem Verteilerschrank für das Arretieren vorhanden sein müssen, muss das am Dachmodul-Gehäuse verwendete Arretier-Vorrichtung an das in dem jeweiligen Verteilerschrank vorhandene Gegenelement angepasst sein.

Der Nachrüst-Baukasten weist ferner häufig auch nicht nur eine, sondern mehrere Sorten von Abschirm-Elementen zum Abschirmen der Antennenstrahlung auf, welche im Dachmodul-Gehäuse montiert werden, um die Antennenstrahlung nur in die gewünschten Richtungen aus dem Dachmodul-Gehäuse austreten zu lassen.

Dabei müssen je nach Aufstellungsort und auch Art und Abstrahlkegel der verwendeten Antenne unterschiedliche Bereiche abgedeckt werden, so dass hierfür auch unterschiedliche Sorten von Abdeckelementen, meist Bleche aus Eisen, zum Nachrüst-Baukasten gehören.

Ferner kann ein solcher Nachrüst-Baukasten auch bereits, meist mehrere, Sorten von Antennen, die man je nach Gegebenheiten und gewünschtem Abstrahlbereich am Aufstellort auswählt:

Omnidirektionale Antennen strahlen in alle Richtungen ab, zum Beispiel in einem halbkugelförmigen oder sogar mehr als halbkugelförmigen Abstrahlbereich, so dass also dabei der Abstrahlkegel einen Kegelwinkel von 180° oder gar mehr besitzt.

Unidirektionale Antennen weisen einen wesentlich schmaleren Abstrahlkegel auf, bei rotationssymmetrischem Kegel häufig mit einem Kegelwinkel von unter **120°** oder gar unter **90°.**

So kann beispielsweise ein Abstrahlbereich in Form eines Viertels einer Kugel sinnvoll sein, wenn der Verteilerschrank direkt an einer langen Häuserfront steht.

Dementsprechend unterscheiden sich die verschiedenen Antennen meist hinsichtlich ihrer Gestalt, insbesondere hinsichtlich ihrer Höhe, sowie eben auch hinsichtlich ihrer Abstrahlung-Charakteristik und/oder der Antennenleistung.

Der Nachrüst-Bausatz umfasst ferner meist mehrere Sorten einer Antennen-Elektronik, wie sie zum Betrieb der Antenne benötigt wird, wobei zumindest pro Sorte an Antenne auch eine Sorte an Antennen-Elektronik benötigt wird.

Darüber hinaus kann ein und dieselbe Antenne auch mit unterschiedlichen Antennen-Elektroniken betrieben werden, die sich beispielsweise hinsichtlich der Leistung unterscheiden oder Ähnliches.

Ferner umfasst der Nachrüst-Bausatz meist nicht nur einen, sondern mehrere Sorten von Kabel-Sätzen, die dazu dienen, die Antenne einerseits mit der Antennen-Elektronik und andererseits mit einer Stromquelle zu verbinden für den Strom- und/oder Signaltransport.

Darüber hinaus kann ein solcher Nachrüst-Baukasten auch weitere Elemente enthalten:
So kann die benötigte Antennen-Elektronik - zum Beispiel je nach Ausstattungsgrad des Verteilerschrankes - wahlweise im Dachmodul-Gehäuse, im Innenraum des Verteilerschrankes oder auch im Sockelraum des Verteilerschrankes montiert werden.

Dementsprechend sind für die einzelnen möglichen Montagepositionen jeweils entsprechende Befestigungsvorrichtungen für die Antennen-Elektronik Bestandteil des Nachrüst- Baukastens und somit meist nicht nur jeweils eine solche Befestigungsvorrichtung - beispielsweise für die Befestigung im Dachmodul-Gehäuse -, sondern mehrere Sorten von Befestigungsvorrichtungen für jeden Befestigungsort für die verschiedenen Antennen-Elektronik.

Des Weiteren kann der Nachrüst-Bausatz mehrere Sorten von Kabel-Sätzen umfassen, je nach Art der zu verbindenden Sorte von Antenne mit zu verbindender Sorte von Antennen-Elektronik, der Anzahl der zu montierenden Antennen, der Montageposition, der Antennen-Elektronik usw.

Um auch neue, mit einer Antenne ausgestattete, Verteilerschränke in vielen Varianten aus nur einer sehr begrenzten Anzahl von Einzelelementen herstellen zu können, wird erfindungsgemäß ein Antennenschrank-Baukasten vorgeschlagen, der einerseits den eben beschriebenen Antennen-Nachrüst-Baukasten umfasst, zusätzlich aber einen Verteilerschrank-Baukasten mit den entsprechenden Einzelteilen, um einen Verteilerschrank - ohne Dachelement - in der gewünschten Form, Größe und weiteren Details herstellen zu können.

Dementsprechend umfasst ein solcher Verteilerschrank-Baukasten in der Regel
- wenigstens eine Sorte von Sockeln, die im Erdboden eingelassen werden, um darauf den Verteilerschrank aufzubauen, sowie
- abhängig von der gewünschten Grundrissgröße des Verteilerschrankes und der Größe seines Sockels wenigstens eine, vorzugsweise mehrere, Sorten von Sockel-Kästen und
- vorzugsweise wenigstens eine, vorzugsweise mehrere, Sorten von Bodenplatten, die als Abdichtung und Trennebene zwischen dem Sockel-Kasten und dem vorzugsweise darauf aufzusetzenden Montagegestell.

Des Weiteren umfasst ein solcher Baukasten weiterhin wenigstens eine Sorte eines Verteilerschrank-Gehäuses.

Das Verteilerschrank-Gehäuse umfasst in der Regel eine, insbesondere mehrere, Sorten eines Montagegestells entsprechend der gewünschten Abmessungen des herzustellenden Verteilerschrankes oder - was die bevorzugte Vorgehensweise ist - einen eigenen Montagegestell-Baukasten:
Denn das Montagegestell ist in der Regel ein Rahmengestell mit Profilstreben entlang der Außenkanten seiner kubischen Form und zusätzlichen Querverstrebungen beabstandet zu den Außenkanten.

Dementsprechend besteht ein solcher Montagegestell-Baukasten aus den Profilen der für die gewünschten Abmessungen eines Verteilerschrankes notwendigen Längen sowie Verbindungselementen, insbesondere Eck- und T-Elementen, um diese Profilelemente zu einem Rahmengestell zusammenzubauen, welches das Montagegestell bildet.

Dieses auf den Sockelkasten aufgesetzte und fixierte Montagegestell wird zu einem Verteilerschrank-Gehäuse komplettiert, indem es vorzugsweise zumindest mit einer Außenbeplankung als Wetterschutz und Einbruchsschutz beplankt wird, so dass der Verteilerschrank-Baukasten wenigstens eine, insbesondere mehrere Sorten von außen-Beplankungs-Paneelen umfasst, die entweder am Montagegestell fest montiert werden oder auch die Form von Türen oder Klappen oder anderen zu öffnenden Elementen aufweisen können.

Falls der Verteilerschrank auch mit einem Klima-Modul ausgestattet werden können soll, umfasst der Verteilerschrank-Baukasten auch wenigstens eine, vorzugsweise mehrere, Sorten von Klima-Modulen.

Vorzugsweise umfasst der Baukasten dann auch zusätzliche Beplankungs-Paneele für eine Innenbeplankung, also eine ebenfalls am Montagegestell befestigte Beplankung, die aber beabstandet innerhalb der zuvor erwähnten Außenbeplankung angebracht wird, um dazwischen Luft zirkulieren lassen zu können und/oder durch die Innenbeplankung elektromagnetische Abstrahlung aus dem Inneren des Verteilerschrankes zu verhindern.

### c) Ausführungsbeispiele

Ausführungsformen gemäß der Erfindung sind im Folgenden beispielhaft näher beschrieben. Es zeigen:
- Figur **1**a, b:: perspektivische Ansichten des Antennen-Dachmoduls,
- Figur **2:**: eine Explosionsdarstellung des Antennen-Dachmoduls samt Antennen,
- Figur **3**a, b:: einen Vertikalschnitt durch das Antennen-Dachmodul der Figur zwei,

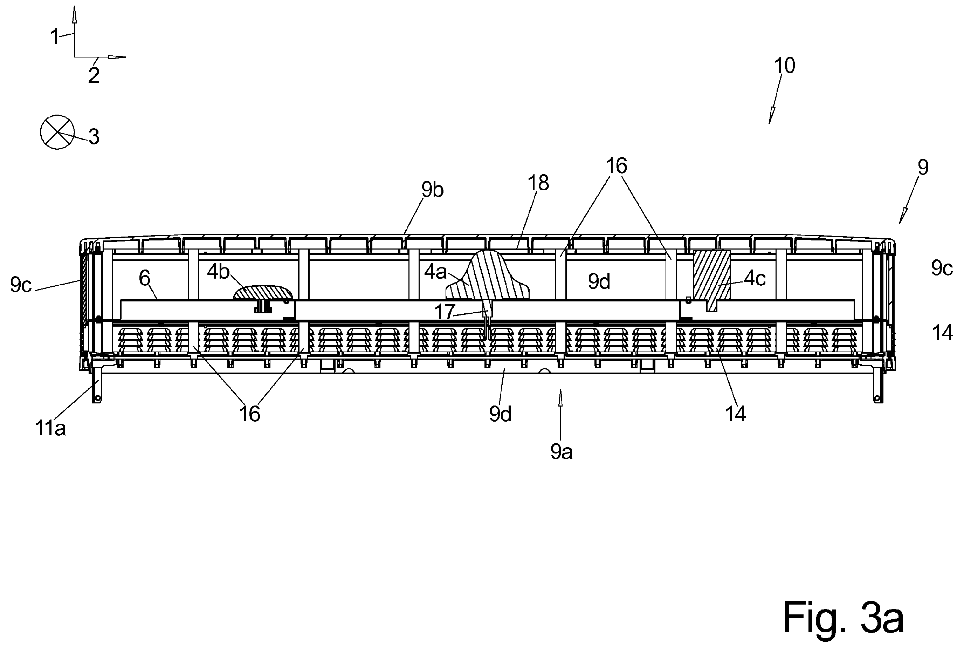

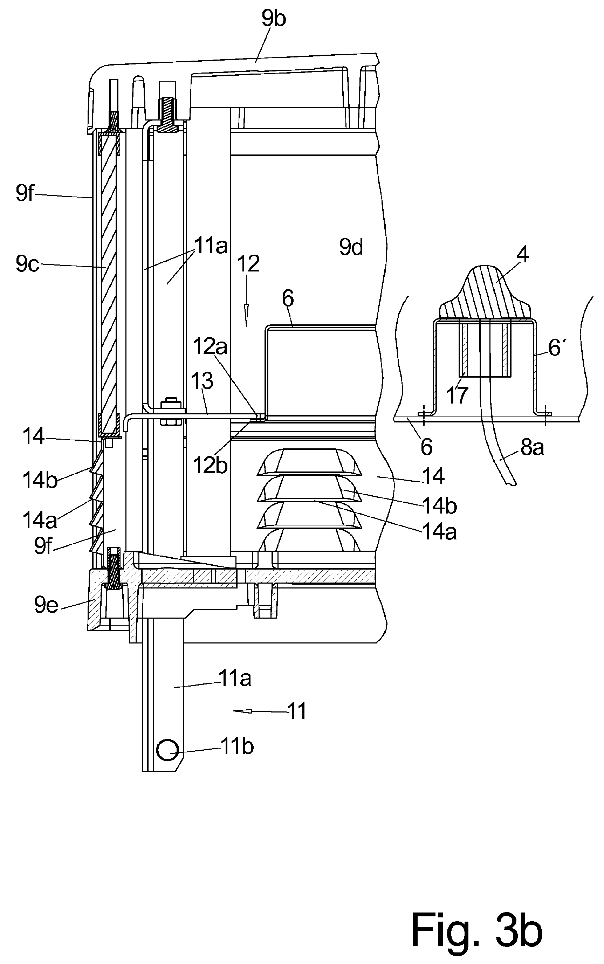

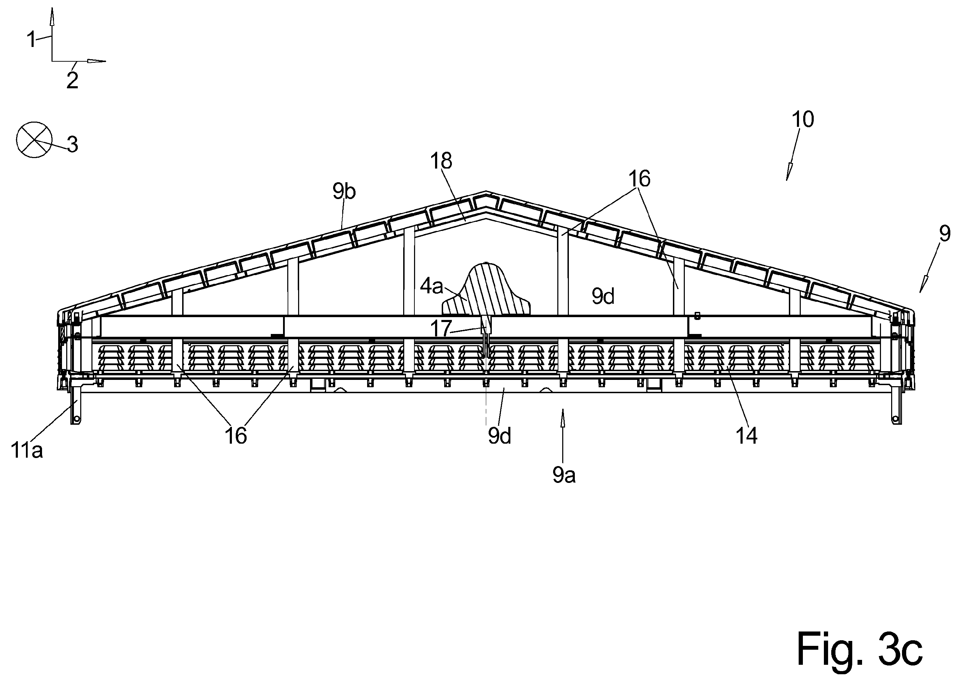

- Figur **3**c:: eine Abwandlung gegenüber Figur **3**a mit einem anders geformten Dachelement,

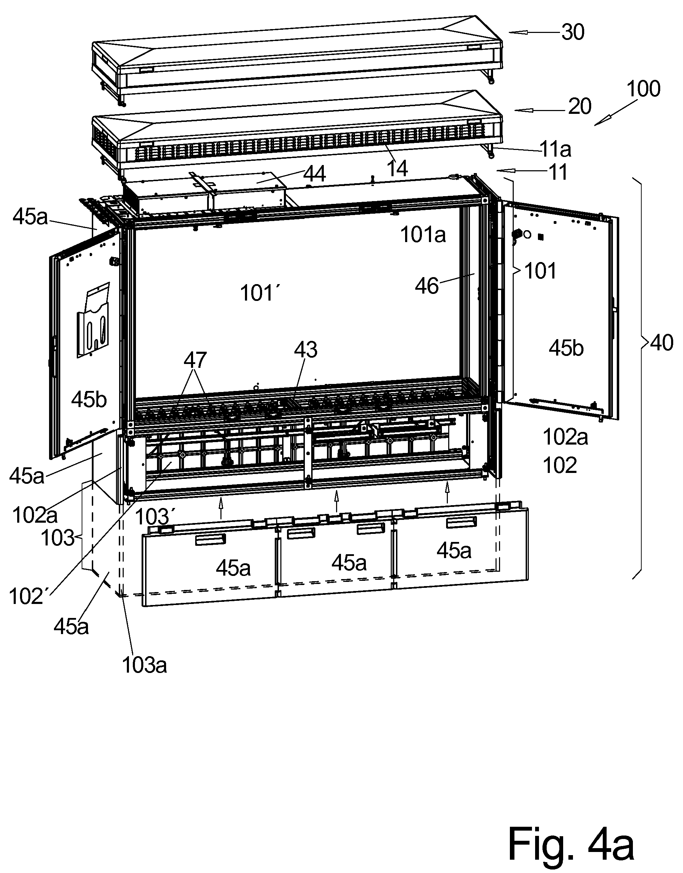

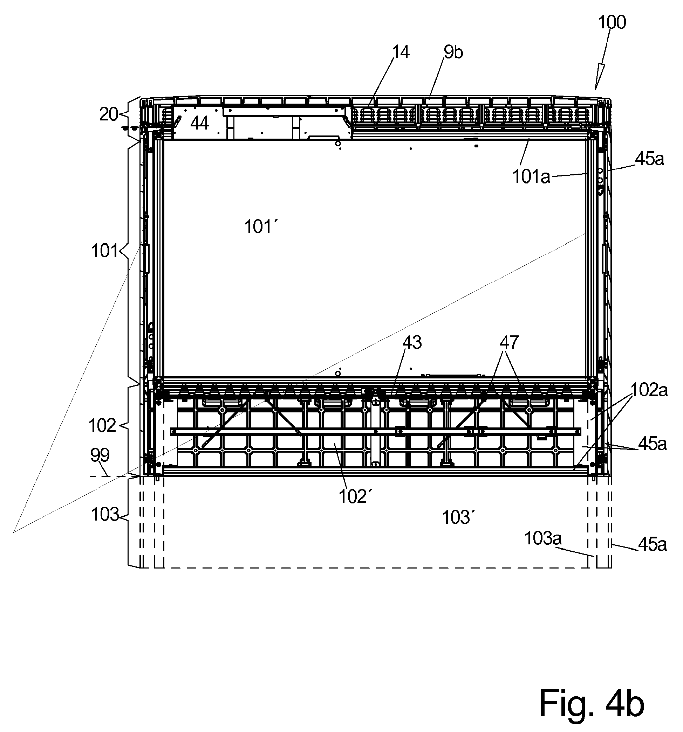

- Figur **4**a:: einen üblichen Verteilerschrank in Explosionsdarstellung,
- Figur **4**b:: den Verteilerschrank gemäß Figur **4**a im montierten Zustand im Vertikalschnitt,

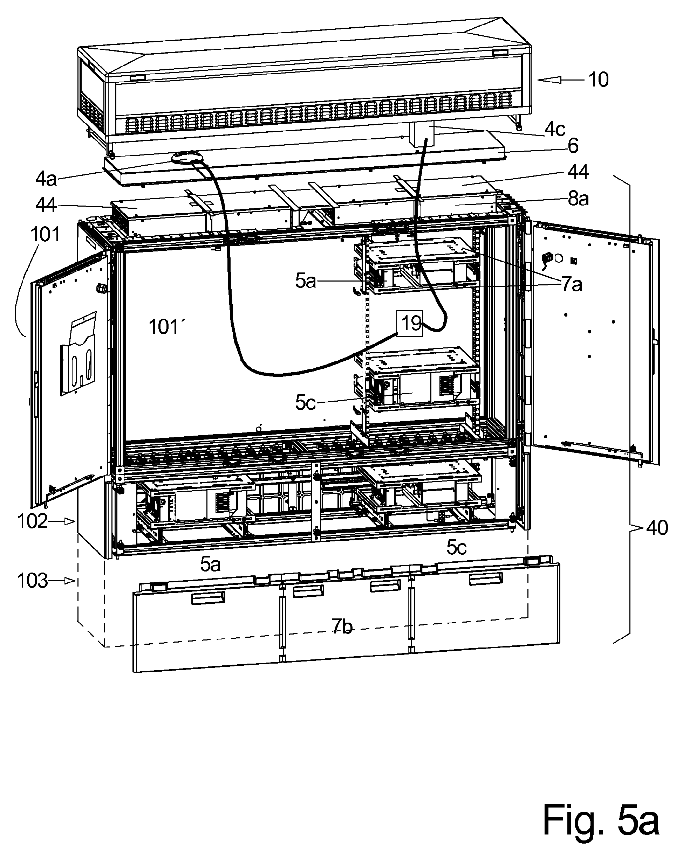

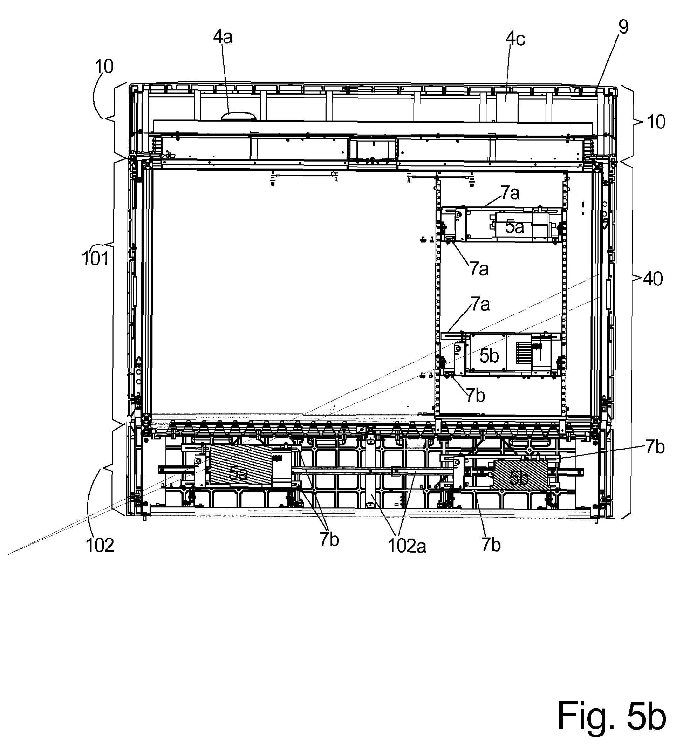

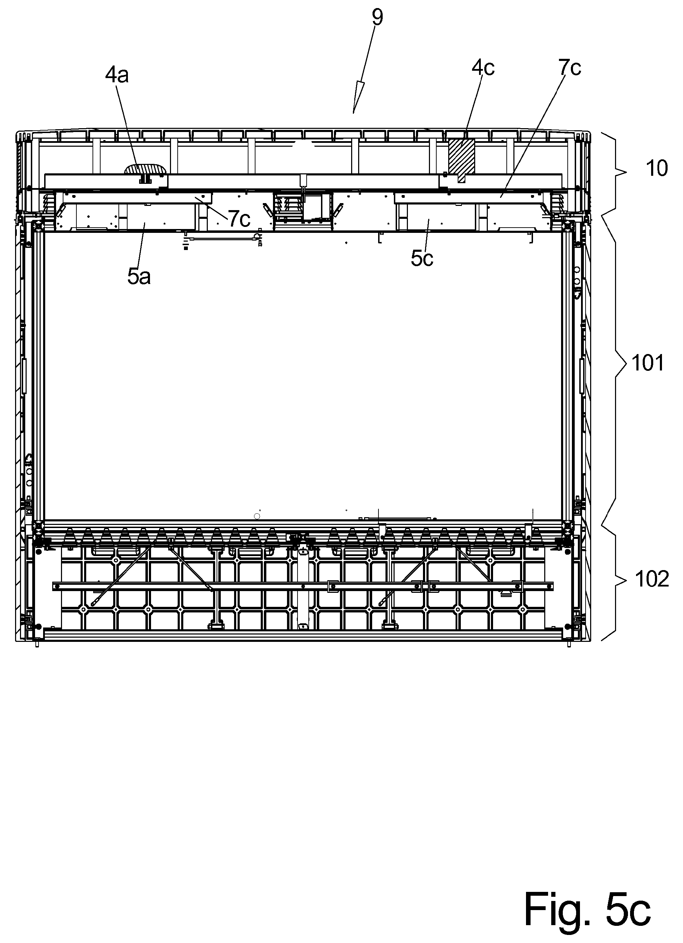

- Figur **5**a:: einen mit einem Antennen-Dachmodul ausgestatteten Verteilerschrank in Explosionsdarstellung,
- Figur **5**b:: den Verteilerschrank gemäß Figur **5**a im montierten Zustand im Vertikalschnitt,
- Figur **5**c:: eine abgewandelte Bauform des Verteilerschrankes gemäß Figur **5**a, b ebenfalls im Vertikalschnitt.

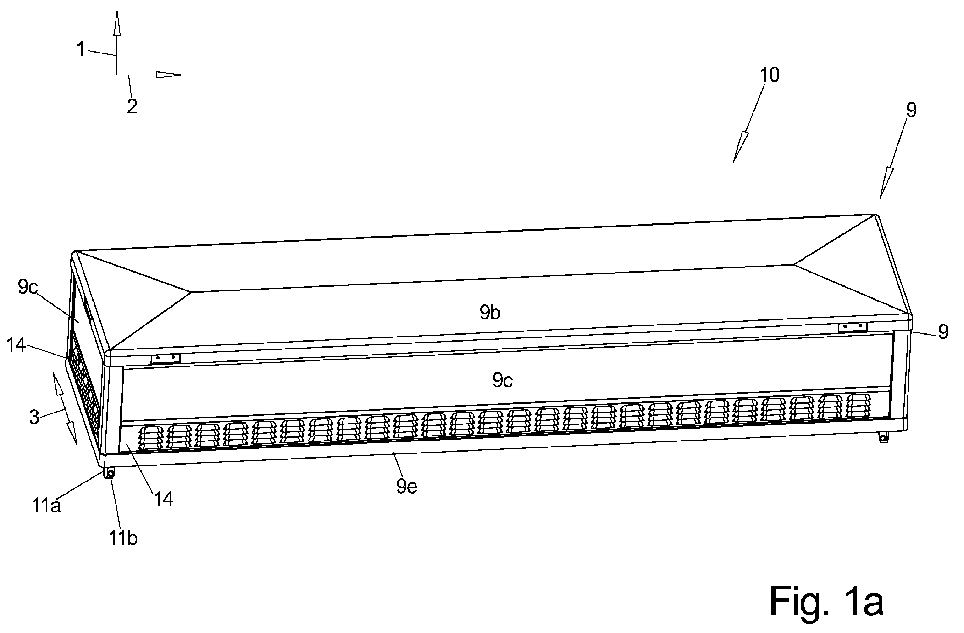

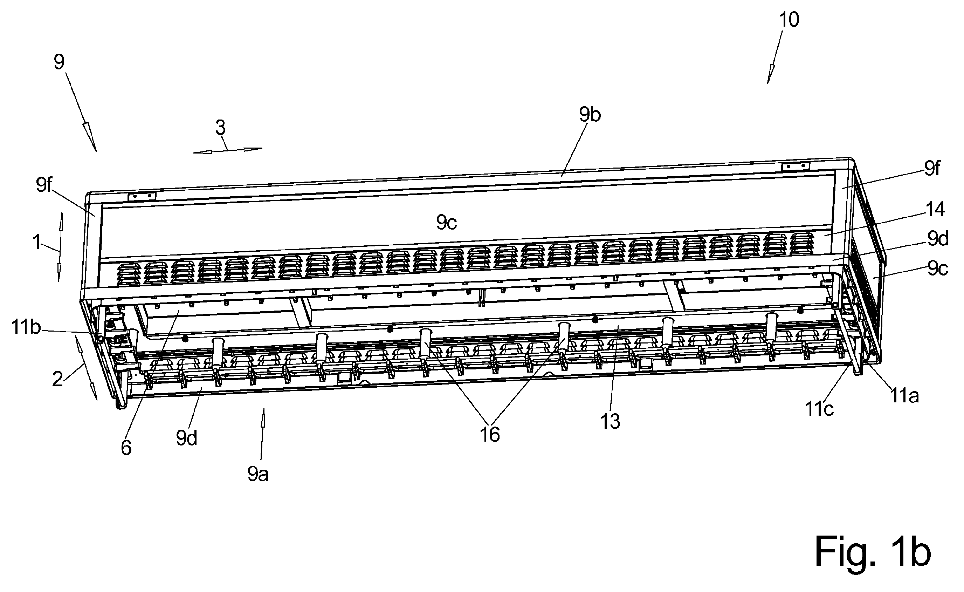

Die **Figuren 1a****,** **b** zeigen das fertig montierte, etwa kubus-förmige und nach unten offene erfindungsgemäße Antennen-Dachmodul **10** in einer Ansicht schräg von oben sowie in einer Ansicht schräg von unten, welches in der Aufsicht betrachtet in der ersten horizontalen Richtung, der Längsrichtung **2** des Dachmoduls, seine größere Erstreckung und in der zweiten horizontalen Richtung, der Querrichtung **3** des Dachmoduls, die geringere Erstreckung aufweist.

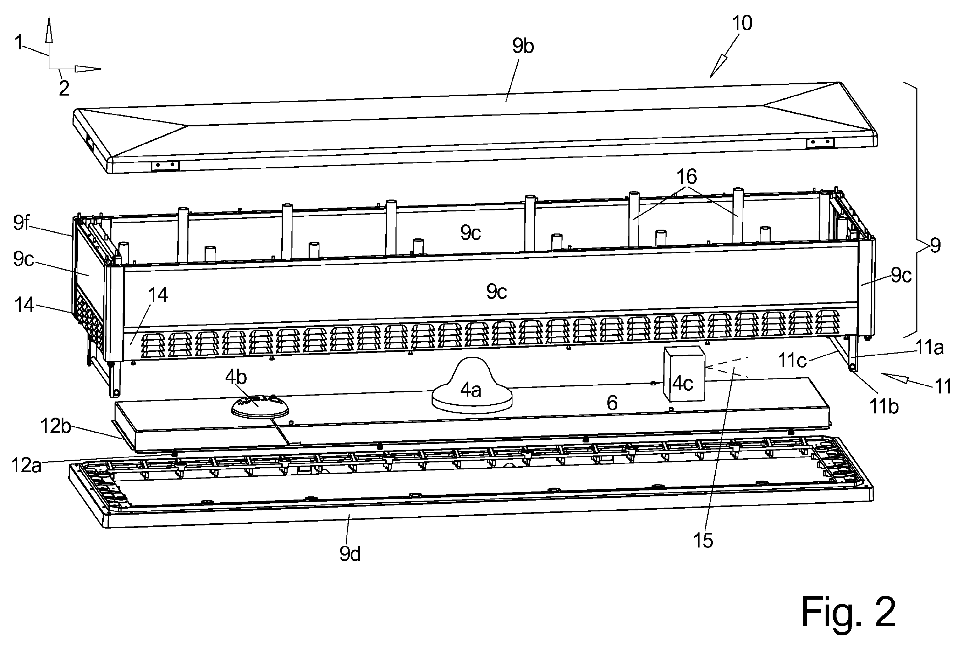

Die Einzelteile, aus denen sich dieses Antennen-Dachmodul **10** zusammensetzt, sind am besten aus der Explosionsdarstellung der **Figur 2** ersichtlich, die aber zusätzlich bereits die wenigstens eine Antenne aufweist, die nur optionaler Bestandteil des verkauften Antennen-Dachmoduls ist, dass sich häufig der Kunde die Antenne und die zugehörige Antennen-Elektronik selbst beschafft und in das Antennen-Dachmodul einbaut.

Das Ineinander-Greifen und gegenseitige Befestigen der Einzelteile ergibt sich am besten aus dem Vertikalschnitt gemäß **Figur 3a** sowie dessen Detailvergrößerung des dortigen linken Bildrandes aus **Figur 3b****.**

In der Schrägansicht von oben gemäß **Figur 1a** ist nur das Dachmodul-Gehäuse **9** zu erkennen, da sich die weiteren Teile des Antennen-Dachmoduls **10** hier nicht einsehbar im Inneren befinden, und nur in den **Figuren 1 b, 2** sowie **3a, b** zu erkennen sind.

Das Dachmodul-Gehäuse **9,** welches die Form einer nach unten offenen, länglichen, Kubus-förmigen Wanne besitzt, besteht - wie am besten in **Figur 2** zu erkennen - von unten nach oben aus
- einem unten in der Horizontalen umlaufenden, rechteckigen Unterrahmen **9**d,
- darauf aufsitzenden, vertikal stehenden, im Rechteck umlaufenden Wandelementen **9**c, und
- auf dem oberen umlaufenden Rand der Wandelemente **9**c etwa plattenförmigen, etwa parallel und damit horizontal zum Unterrahmen **9**d verlaufenden Dachelement **9**b.

Die Oberseite des Dachelementes **9**b ist vorzugsweise nicht völlig eben, sondern wie hier dargestellt ganz leicht walmdach-förmig ausgebildet, um das Ablaufen von Regen und Schnee zu erleichtern.

Die Wandelemente **9**c bestehen in diesem Fall jeweils im oberen Bereich aus einer ebenen Platte, vorzugsweise aus Kunststoff, und im unteren Bereich aus einem Kiemenblech **14,** welches nachfolgend erläutert wird.

Die Wandelemente **9**c sind mit ihren vertikalen Kanten - wie am besten in **Figur 2** **zu** erkennen - in entsprechende vertikale, zu den Wandelementen **9**c hinweisenden, Nuten von vertikal verlaufenden Eckpfosten **9**f - oder auch nicht dargestellten Zwischenpfosten - eingeschoben.

Die Höhe der Kiemenbleche **14** ist bei allen vier Wandelementen in etwa gleich.

In diesem Dachmodul-Gehäuse **9** ist entlang der Wandelemente **9**c innen umlaufend etwa auf der Höhe der Oberkante der Kiemenbleche **14** ein horizontal liegender Zwischenrahmen **13** eingebaut, der eine großflächige Öffnung besitzt.

Der am besten in **Figur 2** erkennbare Montageträger **6,** hier in Form einer nach unten offenen Montagewanne **6,** welche an ihrer Unterkante einen umlaufenden nach außen vorstehenden Flansch **12**b aufweist. Diese Montagewanne **6** ist von unten durch die Öffnung des Zwischenrahmens **13,** die ja kleiner ist als die Öffnung **9**a des gesamten Antennen-Dachmoduls an dessen unteren Rand, nach oben hindurch geschoben, bis deren Flansch **12**b an der Unterseite im Bereich des inneren Randbereiches des Zwischenrahmens **13** anliegt, und mit diesem verschraubt werden kann. Es versteht sich von selbst, dass zu diesem Zweck der Grundriss des nach oben aufragenden Teils der umgekehrt wannenförmigen Montagewanne **6** in der Aufsicht betrachtet etwas kleiner ist als die Öffnung im Zwischenrahmen **13.**

Zur Stabilisierung des Dachmodul-Gehäuses **9** umfasst dieses weiterhin vertikal verlaufende Vertikalstützen **16,** die entlang der Wandelemente **9**c beabstandet an deren Innenseite verlaufen, und mit ihrem unteren Ende mit dem Unter-Rahmen **9**d und mit ihrem oberen Ende mit dem Dachelement **9**b fest verbunden sind.

Das Dachelement **9**b besteht vorzugsweise ebenfalls aus Kunststoff und ist deshalb als auf der Unterseite verrippte Platte ausgeführt.

Ferner steht über die Unterseite des Unter-Rahmens **9**d in den Eckbereichen je ein vertikal verlaufender Arretier-Zapfen **11**a nach unten vor, von denen gemäß **Figur 1b** und **Figur 2** durch die beiden jeweils an einem längsseitigen Ende vorstehenden Arretierzapfen **11**a durch je eine entsprechend gerichtete, horizontal verlaufende Arretier-Bohrung **11**b im unteren Ende des Arretierzapfens **11**a ein Arretier-Bolzen **11**c hindurch geschoben dargestellt ist.

Wie anhand der **Figuren 5b** **und c** zu erkennen, ragen beim Aufsetzen des Antennen-Dachmoduls auf das obere Ende eines dachlosen Verteilerschranks **40** diese Arretierzapfen **11**a in die Oberseite des VerteilerschrankOberteiles **101** in dort vorhandene Arretier-Öffnungen hinein und können mit diesem formschlüssig verbunden werden, indem dann der VerriegelungsQuerbolzen **11**c durch die beiden Arretier-Bohrungen **11**b der beiden in Querrichtung benachbarten Arretierzapfen **11**a hindurch geschoben wird und sich dabei auch durch entsprechende, dazu fluchtende Bohrungen eines Bauteiles des Verteilerschrank-Oberteiles **101** hindurch erstreckt.

In der Detailvergrößerung der **Figur 3b** des Vertikalschnittes der **Figur 3** des Antennen-Dachmoduls **10** ist die Anordnung und Verbindung der Einzelteile des Antennen-Dachmoduls **10** besser erkennbar:
**Figur 3b** zeigt, dass die Eckpfosten **9**f am oberen Ende mit dem Dachelement **9**b und am unteren Ende mit dem Unterrahmen **9**e verbunden sind, wobei am unteren Ende die Verschraubung zwischen den beiden Teilen sichtbar ist.

Ebenfalls vertikal durchgehend vom Dachelement **9**b nicht nur bis zum Unterrahmen **9**e, sondern durch diesen hindurchgehend und nach unten aus dem Unterrahmen **9**e vorstehend, sind die Arretierzapfen **11**a, die Bestandteil der Arretiervorrichtung **11** zum oben beschriebenen Arretieren des Antennen-Dachmoduls **10** gegenüber einem in **Figur 5a****,** **b** dargestellten Verteilerschrank vorhanden sind, und deren Verschraubung am oberen Ende gegenüber dem Dachelement **9**b in **Figur 3b** sichtbar ist.

Ferner ist bei dem Wandelement **9**c der obere Teil in Form einer ebenen, vertikal stehenden, geschlossenen Platte und dem unteren Teil in Form eines Kiemenbleches **14** zu erkennen:
Der obere Teil in Form der Platte ist in Blickrichtung horizontal verlaufenden U-Profilen mit seinem oberen und unteren Rand gehalten, wobei das obere U-Profil in der Unterseite des Dachelementes **9**b steckt und mit diesem fest verbunden ist. Auch das untere U-Profil ist gegenüber den benachbarten Eckpfosten **9**f fixiert.

An dem Kiemenblech **14,** welches in der Regel aus einem Blech-Biegeteil besteht und damit aus Metall, meist Aluminium, sind die schräg nach außen gedrückten Ausprägungen zu erkennen, die als Vordach **14**b wirken und dadurch die durch die Ausprägung unter dem Vordach entstehende Luftdurchtritts-Öffnung **14**a vor der Witterung teilweise schützen.

Wie die Figuren zeigen, sind jeweils vier solcher kiemenartigen Öffnungen übereinander angeordnet und solche senkrechten Reihen von Kiemen vielfach nebeneinander über die Länge des Kiemenbleches **14** verteilt.

Es soll jedoch an dieser Stelle klargestellt werden, dass für den Fall, dass in den Wandelemente **9**c keine Luftdurchtritts-Öffnungen benötigt werden, auch keine Kiemenbleche vorhanden sein müssen, sondern ein Wandelemente **9**c über seine gesamte Höhe aus einer einzigen, ebenen und geschlossen durchgehenden Platte bestehen kann.

An dem Arretierzapfen **11**a, der ebenfalls aus einem Blechbiegeteil besteht, hier etwa einem Winkelprofil, ist etwa auf halber Höhe seiner Erstreckung eine Ausprägung zum Innenraum, dem Antennenraum **9**d hin, zu erkennen, sodass an dieser horizontalen Ausprägung, die an jedem der vier Arretierzapfen **11**a vorhanden ist, von der Unterseite her der horizontal umlaufende Zwischenrahmen **13,** der meist ebenfalls aus einem Blech besteht, angelegt und mit diesem verschraubt werden kann.

An dem innen um dessen Öffnung umlaufenden Randbereich des Zwischenrahmens **13** wiederum liegt von der Unterseite her der Flansch **12**b des in diesem Hauptteil der Darstellung der **Figur 3b** wiederum umgekehrt wannenförmigen Montagewanne **6** an und ist mit diesem über entsprechende Bohrungen **12**a verschraubt, wodurch zusammen die Fixiervorrichtung **12** zum Fixieren des Montageträgers **6** in Form der Montagewanne **6** am Zwischenrahmen **13** zur Verfügung gestellt wird.

Der nach oben aufragende Mittelteil der Montagewanne **6** erstreckt sich durch die Öffnung des Zwischenrahmens **13** hindurch nach oben, sodass die in **Figur 3a** ersichtlichen eine oder mehreren Antennen **4**a, b, c auf einem Höhenniveau montiert sind, welches über dem Höhenniveau des Zwischenrahmens **13** liegt.

Wie am besten in **Figur 3a** zu erkennen, hat dies u.a. den Zweck, dass bei vielen Antennen - hier bei allen drei Antennen **4**a, b, c eingezeichnet - zum Befestigen der Antenne von der ebenen Unterseite der Antenne ein Befestigungsstutzen, meist ein vertikal verlaufender Rohrstutzen **17** mit einem Außengewinde, nach unten abragt.

Durch die sich ausreichend weit nach oben aufwölbende Montagewanne **6** endet dieser Rohrstutzen **17** noch innerhalb des Höhenbereiches der Montagewanne **6,** und das aus dem hohlen Inneren des Rohrstutzens **17** heraus geführte Kabel oder Kabelsatz **8**a - wie aus Übersichtlichkeitsgründen nur in **Figur 3b** eingezeichnet - verlässt noch im Höhenbereich oberhalb des Zwischenrahmens **13** den Rohrstutzen **17** und damit die Antenne z.B. **4**a.

Dies ist wichtig, um in diesem Höhenbereich das Kabel auch zur Seite führen zu können, und des Weiteren ist wichtig, dass der Rohrstutzen **17** nicht bis in den Höhenbereich der Kiemenbleche **14** nach unten hineinragt.

In **Figur 3b** ist im rechten Bildteil dargestellt, dass alternativ der Montageträger **6** auch eine ebene Platte sein kann, die ebenfalls an der Unterseite des Zwischenrahmens **13** anliegt und mit diesem verschraubt wird und dann als Abstandshalter zum Höhersetzen der Antenne **4** gegenüber dem ebenen Montageblech **6** ein z.B. Hutprofil **6'** verwendet wird, welches dann anstelle der Montagewanne **6** in seiner Oberseite eine entsprechende Durchgangsbohrung aufweist zum Hindurchstecken des Rohrstutzens **17** der Antenne **4,** wenn diese von oben auf den Abstandshalter z.B. in Form des Hutprofiles **6'** aufgesetzt wird.

Das Hutprofil **6'** kann mit dem ebenen Montageträger **6** an seinem Flansch verschraubt werden, und in dem Montageblech **6** kann ebenfalls eine Durchgangsbohrung für das Hindurchführen des Kabels oder Kabelsatzes **8**a vorhanden sein.

**Figur 3c** zeigt eine gegenüber **Figur 3a** abgewandelte Darstellung, in der das Dachelement **9**b in dieser Ansicht in Querrichtung betrachtet vom höchsten Punkt in der Mitte aus relativ stark nach außen unten abfällt bis knapp oberhalb des Montageträgers **6,** hier in Form eines ebenen Montagebleches **6,** an seinen Rändern.

Die **Figuren 2** **und** **3a** lassen auf der Oberseite des Montageträgers **6** bereits in diesem Fall drei Antennen **4**a, b, c aufgesetzt und montiert erkennen, die jedoch nicht zwingend Bestandteil des Antennen-Dachmoduls **10** sind, denn dieses kann auch lediglich im bisher beschriebenen Umfang, also ohne die notwendige elektrische Ausstattung wenigstens einer Antenne **4**a und der zugehörigen Antennen-Elektronik **5**a ausgeliefert und verkauft werden.

In diesem Fall sind - eher beispielhaft - drei unterschiedlich gestaltete und auch dimensionierte Antennen **4**a, b, c in Längsrichtung **2** verteilt auf der Oberseite des Montageträgers **6** befestigt: In der Mitte die etwa glockenförmige Antenne **4**a, die in diesem Fall eine omnidirektional, also mit einem etwa halbkugelförmigen Abstrahlkegel **15** abstrahlende Antenne ist, wie sie auch beispielhaft in dem rechten Bildteil der **Figur 3b** dargestellt ist.

Die quaderförmige Antenne **4**c kann eine unidirektionale Antenne sein mit einem beispielsweise nur zur Seite gerichteten Abstrahlkegel **15,** und die linsenförmige, flache Antenne **4**b im linken Bildbereich kann eine beispielsweise in Form einer Viertelkugel als Abstrahlkegel **15** abstrahlende Antenne sein.

In der Praxis ist häufig entweder nur eine omnidirektionale Antenne, z.B. **4**a, in den beiden horizontalen Richtungen **2, 3** in der Mitte des Montageträgers **6** und damit auch in der Aufsicht betrachtet in der Mitte des Antennen-Dachmoduls **10** vorhanden, oder es sind dann meist in Längsrichtung **2** jeweils nach außen strahlende unidirektionale Antennen **4**a oder **4**c an den beiden in Längsrichtung beabstandeten Enden des Antennen-Dachmoduls **10** auf dessen Montageträger **6** montiert.

In der Regel wird die Antenne **4**a, b, c auf einer solchen Höhe montiert, dass sie möglichst nah unter der Unterseite des Dachelements **9**b sitzt, um eine möglichst hohe Abstrahlposition für die Antenne zu erreichen.

Da dann ein außen an dieser Stelle auf dem Dachelement **9**b sich befindendes Lebewesen eine Strahlung erhalten würde, die über dem zulässigen Grenzwert liegen kann, ist häufig im Bereich oberhalb der jeweiligen Antenne **4**a, b, c - sofern diese auch nach oben abstrahlt - ein Abschirmblech **18** z.B. an der Unterseite des Dachelementes **9**b angeordnet.

Die Figuren **4a****,** **b****,** **5a****,** **b****,** **c** sollen vor allem die Nachrüstung eines vorhandenen Antennenschrankes **100** oder auch dessen Neuerstellung mit dem bisher beschriebenen Antennen-Dachmodul **10** veranschaulichen, wobei unbenommen ist, ob das Antennen-Dachmodul **10** ohne die elektrische Ausstattung geliefert wird und Antenne **4**a, Antennen-Elektronik **5**a und Kabelsatz **8**a separat zugeliefert werden oder dies bereits Bestandteil des fertig ausgestatteten Antennen-Dachmoduls **10** ist.

Die **Figuren 4a****,** **b** zeigen in Explosionsdarstellung sowie im Vertikalschnitt eines üblichen Verteilerschrank **100,** also ohne Antenne, wie er häufig mit dem erfindungsgemäßen Antennen-Dachmodul **10** und damit mit einer Antenne **4**a nachgerüstet werden soll:
Das Gehäuse eines solchen Verteilerschrankes kann sehr unterschiedlich aufgebaut sein, u.a. abhängig von den verwendeten Materialien:
   Es gibt Verteilerschrank-Konstruktionen, bei denen die einzelnen Elemente, wie Seitenteile, Dach, Türen usw. als Blechbiegeteile hergestellt sind, die auch gleichzeitig eine tragende Funktion haben können, sodass die elektrischen Einbauten direkt an entsprechenden Befestigungsmöglichkeiten dieser Blechbiegeteile befestigt werden können.

Vorliegend ist eine Bauform mit einer Außenbeplankung aus wetterfesten Kunststoffteilen dargestellt, bei der die tragende Funktion von einem Traggestell in Form eines Rahmens aus Metallprofilen geboten wird, die entlang der Kanten des etwa kubusförmigen, glattflächigen VerteilerschrankGehäuses verlaufen. An dem Traggestell sind auf der Außenseite AußenBeplankungs-Paneele, die aus Kunststoff bestehen, befestigt und manchmal aus Gründen der Erzielung einer Doppelwandigkeit und/oder um die elektromagnetische Abstrahlung nach außen zu verringern, im Inneren auch InnenBeplankungs-Paneelen die dann meist aus Metall bestehen.

Auch das auf dem Traggestell aufgesetzte, etwa plattenförmige oder hutförmige, Dachelement besteht meist weitestgehend aus Kunststoff.

Im vorliegenden Fall besteht der Verteilerschrank aus mehreren übereinander angeordneten Teilen, nämlich
- dem Sockelelement **103,** welches weitestgehend im Erdboden eingegraben ist,
- dem darauf sitzenden, die gleiche Grundfläche aufweisenden, Verteilerschrank-Unterteil **102** sowie
- dem wiederum auf dem Verteilerschrank-Unterteil sitzenden und etwa die gleiche Grundfläche aufweisenden Verteilerschrank-Oberteil **101.**

Wenn die im Wesentlichen offene Oberseite des Verteilerschrank-Oberteiles **101** von einem im wesentlichen geschlossenen Dachmodul **30** oder einem offenen, z.B. die beschriebenen Kiemenbleche **14** enthaltenden, Dachmodul **20** zur Oberseite hin abgedeckt ist, handelt es sich um einen vollständigen Verteilerschrank **100.** Ohne das Dachmodul **30** oder **20,** also mit oben offenen Verteilerschrank-Oberteil **101,** spricht man von einem dachlosen Verteilerschrank **40.**

Die drei genannten Teile, also Sockelelement **103,** Verteilerschrank-Unterteil **102** und Verteilerschrank-Oberteil **101,** bestehen jeweils aus einem darin vorhandenen jeweiligen, oben beschriebenen Traggestell **103**a, **102**a, **101**a, welche zumindest auf den Außenseiten mit Außen-Beplankungs-Paneelen **45**a, b beplankt sind und damit der jeweilige Innenraum dieser Teile, also der Hauptraum **101'** im Verteilerschrank-Oberteil **101,** der Zufuhrraum für die Erdkabel **102'** im Verteilerschrank-Unterteil **102** und der Sockelraum **103'** im Sockelelement **103** weitestgehend vor der Witterung geschützt ist.

In der vorliegenden Darstellung sind als Außenbeplankungspaneele **45**a die im Betriebszustand fest und unbeweglich am Traggestell befestigten Paneele bezeichnet, während mit **45**b die in Form von Türen oder manchmal auch Klappen ausgebildeten beweglichen Außen-Beplankungspaneele bezeichnet

Im meist gut abgedichteten Hauptraum **101' werden** die benötigten Kabelaufteilungen, Kabelverbindungseinheiten, sowie aktive elektrische Elemente, wie Verstärker u. ä. untergebracht und betrieben, sodass im Hauptraum **101'** also auch eine Stromversorgung vorhanden ist.

Die frontseitigen Außen-Beplankungspaneele **45**a des Verteilerschrank-Unterteiles **102,** welche sich in der Regel oberhalb der Erdgleiche **99** befinden - wie in **Figur 4b** eingezeichnet - sind in **Figur 4a** demontiert und nach vorne gezogen dargestellt, während das gesamte Sockelelement **103** einschließlich dessen Traggestells **103**a in den **Figuren 4a****,** **b** nur durch gestrichelte Linien angedeutet ist.

Die Traggestelle **101**a, **102**a und **103**a sind in aller Regel gegeneinander verschraubt, jedoch gibt es auch Konstruktionen, bei denen über alle drei Teile ein durchgehendes Traggestell vorhanden ist.

Bei der vorliegenden Konstruktion ist eine Bodenplatte **43** zu erkennen, die an der Grenze zwischen Verteilerschrank-Unterteil **102** und Verteilerschrank-Oberteil **101** horizontal und sich über den gesamten horizontalen Querschnitt des Verteilerschrankes erstreckend eingebaut ist, und in der die hohlkegelförmigen Kabeltüllen **42** aus Gummi erkennbar sind, durch die hindurch - nach Abtrennen einer entsprechend hohen Spitze des Hohlkegels der Kabeltülle **47 -** ein Erdkabel von unten dicht nach oben in den Hauptraum **101'** geführt und dort mit den vorhandenen Einbauten verbunden werden kann.

An oder sogar auf der Oberseite des Verteilerschrank-Oberteiles **101** ist in diesem Fall ein sog. Klimamodul **44** vorhanden, welches der Klimatisierung, in den meisten Fällen der Kühlung, des Hauptraumes **101'** dient, der durch die dort vorhandenen aktiven elektrischen Einbauten vor allem im Sommer relativ stark aufgeheizt wird.

Bei einem solchen Klimamodul kann es sich um einen einfachen Lüfter handeln, der lediglich eine Luftzirkulation erzeugen soll, die dann vor allem eine Luftströmung zwischen dem Innenraum **101'** und dem Zwischenraum zwischen Innenbeplankung und Außenbeplankung und dadurch eine Abkühlung der Luft erzeugen soll, oder es kann sich um ein Klimamodul handeln, welches zusätzlich einen Wärmetauscher umfasst, durch den lediglich die Luft des Innenraumes **101'** geführt wird in einem ersten Luftkreislauf, während in einem zweiten Luftkreislauf, der durch den Zwischenraum zwischen Innenbeplankung und Außenbeplankung zirkuliert, Wärme abgegeben wird. Dieser äußere Luftkreislauf ist dann häufig ein offener Kreislauf, der die warme Luft an die Umgebung abgibt und kühlere Umgebungsluft ansaugt.

Das Klimamodul **44** kann jedoch auch ausschließlich ein Filterelement sein, welches die Luft aus dem Hauptraum **101'** überwinden muss, um in die kühlere Umgebung abströmen zu können, und gleiches gilt dann für die kühlere von außen nach innen strömende Umgebungsluft.

Die Verbindung zur Umgebung erfolgt über die Kiemenbleche **14** des auf die Oberseite des Verteilerschrank-Oberteiles **101** aufgesetzten offenen Dachmoduls **20,** welches zwar auf der Oberseite geschlossen ist, aber wie dargestellt in den Seitenwänden großflächig Kiemenbleche **14** aufweist, wie sie anhand der **Figur 3b** vorstehend beschrieben wurden, sodass hierüber warme Luft aus dem Hauptraum **101'** über das Klimamodul **44** und die Luftdurchtritts-Öffnungen in den Kiemenblechen **14** in die Umgebung gelangen kann.

Falls eine strake Aufheizung des Hauptraumes **101'** nicht zu befürchten ist, genügt das Aufsetzen eines geschlossenen Dachmoduls **30 -** wie darüber dargestellt - also ohne solche Kiemenbleche **14** oder andere Luftdurchtritts-Öffnungen, welches dann dicht auf die Oberseite des dachlosen Verteilerschrankes **40** aufgesetzt wird.

Von der Unterseite des jeweiligen Dachmodules **20** bzw. **30** vorstehen sind bereits die Arretierzapfen **11**a der Arretiervorrichtung **11** zu erkennen, die nach Aufsetzen des Dachmoduls **20** auf die Oberseite des Verteilerschrank-Oberteiles **101** in dort vorhandene entsprechende vertikale, nach oben offene, Arretieröffnungen hinein ragen und durch - wie zuvor beschrieben - Querverschiebung eines Arretier-Querbolzens **11**c, wie an den vorhergehenden Figuren erläutert, formschlüssig gegenüber dem dachlosen Verteilerschrank **40** verriegelt werden kann.

Falls die für das Dach ohne Antenne, also das offene Dachmodul **20** oder das geschlossenes Dachmodul **30** beim vorhandenen Verteilerschrank **100** verwendete Arretiervorrichtung anders gestaltet ist, muss die Arretiervorrichtung am Antennen-Dachmodul **10,** welches gegen das vorhandene Dachmodul **20** oder **30** ausgetauscht werden soll, analog wie bei diesen ausgebildet werden.

Die **Figur 4b** zeigt ferner, dass das Klimamodul **44** nach oben aufragt bis etwa zur Oberkante der Kiemenbleche **14** des Dachmoduls, und deshalb in den Höhenbereich der Kiemenbleche **14 -** zumindest in dem Flächenbereich, in dem ein Klimamodul **44** vorhanden ist - kein anderes Bauteil aus dem Dachmodul in diesen Höhenbereich hineinragen darf.

**Figur 5a****,** **b** zeigt in Explosionsdarstellung und im montierten Zustand im Vertikalschnitt den Verteilerschrank **100,** bei dem das bisher vorhandene Dachmodul **20** oder **30** gemäß **Figur 4a** gegen das erfindungsgemäße Antennen-Dachmodul **10** ausgetauscht wurde:
Im Gegensatz zu den **Figuren 4a****,** **b** sind hier auf an dem Verteilerschrank-Oberteil **101,** also auf dessen Oberseite und damit in den Innenraum des Antennen-Dachmoduls **10** hineinragend, in Längsrichtung **2** hintereinander zwei Klima-Module **44** angeordnet, welche über ein Verbindungsteil miteinander verbunden sind.

Da diese Klimamodule **44** warme Luft in die Umgebung transportieren sollen, weist eben das Dachmodul-Gehäuse **9** des Antennen-Dachmoduls **10** im unteren Bereich seiner Wandelemente **9**c, also dem Höhenbereich, in dem sich die Klimamodule **44** nach Aufsetzen des Antennen-Dachmoduls **10** befinden, die beschriebenen Kiemenbleche **14** auf, wie sie an dieser Stelle und in dieser Höhenlage auch vor der Nachrüstung in dem auf dem Verteilerschrank vorhandenen offenen Dachmodul **20** gemäß **Figur 4a****,** **b** vorhanden waren.

Dabei sind - beispielhaft - diesmal auf dem Montageträger **6** des Antennen-Dachmoduls **10** zwei Antennen **4**a, c dargestellt.

Jede der beiden Antennen **4**a, c erfordert zum Betrieb dieser Antenne auch jeweils eine Antennen-Elektronik **5**a, b, die das von der Antenne **4**a, c abzugebende Signal erzeugt, und an die Antenne **4**a, c liefert.

Zu diesem Zweck ist jede Antennen-Elektronik **5**a, c mittels eines Kabelsatzes **8**a, b einerseits mit einer im Hauptraum **101'** üblicherweise vorhandenen Stromquelle **19** verbunden, und andererseits mit der zugeordneten Antenne **4**a, c.

Wie vor allem **Figur 5a** anschaulich zeigt, kann die Antennen-Elektronik - abhängig davon, welche Abmessungen sie besitzt oder wie stark sie vor Umwelteinflüssen geschützt werden muss - an unterschiedlichen Positionen innerhalb des Verteilerschrankes angeordnet werden:
Eine Möglichkeit besteht darin, eine solche Antennen-Elektronik **5**a oder **5**c im Inneren des Hauptraumes **101'** des Verteilerschrankes **100** anzuordnen. Hierfür wird dann jeweils eine Befestigungsvorrichtung **7**a, **7**b benötigt, die einerseits an die zu befestigende Antennenelektronik **5**a, **5**c hinsichtlich deren Größe und deren Befestigungsmöglichkeiten angepasst ist und andererseits an das Traggestell **101**a im Inneren des Hauptraumes **101'** an dem das Ganze befestigt werden, meist verschraubt werden soll.

Dies ist der für die Antennenelektronik **5**a, c schonendster Befestigungsort, da der Hauptraum **101'** gut abgedichtet und klimatisiert ist, und dort auch die für die Versorgung der Antennenelektronik **5**a, c benötigte Stromquelle **19** vorhanden ist.

Abhängig davon, ob das Antennenkabel die Antenne **4**a, c an der Unterseite und damit aus der Unterseite des Montageträgers **6** vorstehend, verlässt oder an der Seite der Antenne **4**a, c, muss die Kabelführung durch den Montageträger **6** hindurch erfolgen oder ersatzweise durch den diesen umgebenden Zwischenrahmen **13,** wofür entsprechende dichte Durchführungen mit Hilfe von Kabeltüllen etc. geschaffen werde müssen. Die weitere Kabelführung im Hauptraum **101'** erfolgt dann konventionell wie die der übrigen Kabel im Hauptraum **101'.**

Der Nachteil dieser Unterbringung der Antennen-Elektronik **5**a und/oder **5**c abseits des Antennen-Dachmoduls **10** besteht darin, dass das Antennen-Dachmodul **10** nicht komplett mit der nötigen Antennenausstattung, also einschl. Antenne **4**a und/oder **4**c und der zugehörigen Antennenelektronik **5**a und/oder **5**c zugeliefert werden kann, was den Anschluss beim Nachrüsten an den dachlosen Verteilerschrank **40** erleichtern würde.

Will man diese Option wahrnehmen, so sind hierfür - wie in **Figur 5c** angedeutet - ebenfalls entsprechend gestaltete und einerseits an die Antennenelektronik **5**a, c und andererseits das Dachmodul-Gehäuse **9** angepasste Befestigungsvorrichtungen **7**c im Antennen-Dachmodul **10,** insbesondere dessen Dachmodul-Gehäuse **9,** vorzusehen.

**Figur 5a** **und b** zeigen jedoch auch eine dritte Unterbringungsmöglichkeit, falls die beiden vorgenannten beispielsweise aus Platzgründen ausscheiden, nämlich die Unterbringung im Inneren des Verteilerschrank-Unterteiles **102** und dort die Befestigung an dessen Traggestell **102**a**.**

Dann müssen auch für diesen Befestigungsort - jeweils angepasst an die zu befestigende Antennenelektronik **5**a oder **5**c und angepasst an das dortige Traggestell **102**a - spezifische Befestigungsvorrichtungen **7**b vorgesehen werden.

Die notwendigen Verbindungen der einzelnen Bauteile durch Kabelsätze sind in den **Figuren 5a** zum Verteilerschrank-Unterteil **102** hin als auch in den **Figuren 5b** **und** **5c** aus Übersichtlichkeitsgründen nicht eingezeichnet.

### BEZUGSZEICHENLISTE

- **1**: Vertikale
- **2**: erste horizontale Richtung, Längsrichtung des Dachmoduls,
- **3**: zweite horizontale Richtung, Querrichtung des Dachmoduls,
- **4**a, b, c: Antenne
- **5**a, b: Antennen-Elektronik
- **6**: Montageplatte
- **6**a: Montage-Vorrichtung
- **7**a, b, c: Befestigungsvorrichtung
- **8**a, b, c: Kabel-Satz
- **9**: Dachmodul-Gehäuse
- **9**a: Öffnung
- **9**b: Deckel
- **9**c: Wand Element
- **9**d: Antennenraum
- **9**e: Unterrahmen
- **9**f: Eckpfosten
- **10**: Antennen-Dachmodul
- **11**: Arretier-Vorrichtung
- **11**a: Arretier-Zapfen
- **11**b: Arretier-Bohrung
- **11**c: Arretier-Querbolzen
- **12**: Fixier-Vorrichtung
- **12**a: Bohrung
- **12**b: Flansch
- **13**: Anschlag, Zwischenrahmen
- **14**: Kiemenblech
- **14**a: Luftdurchtritts-Öffnung
- **14**b: Vordach
- **15**: Abstrahlkegel
- **16**: Vertikalstütze
- **17**: Rohrstutzen
- **18**: Abschirmblech
- **19**: Stromquelle
- **20**: offenes Dach Modul

- **30**: geschlossenes Dachmodul

- **40**: dachloser Verteilerschrank
- **41 42 43**: Bodenplatte
- **44**: Klima-Modul
- **45** a, b: Außen-Beplankungs-Paneel
- **46**a, b: Innen-Beplankungs-Paneel
- **47**: Kabeltülle

- **99**: Erdgleiche
- **100**: Verteilerschrank mit Dachmodul
- **101**: Verteilerschrank-Oberteil
- **101**a: Traggestell
- **101'**: Hauptraum
- **102**: Verteiler Schrank-Unterteil
- **102'**: Zufuhrraum
- **102**a: Traggestell
- **103**: Sockelelement
- **103'**: Sockelraum
- **103**a: Traggestell

## Patentansprüche

1. **Antennen-Dachmodul (10)** zum Aufsetzen und Befestigen auf einem oben offenen, dachlosen Verteilerschrank **(40),** wobei das Antennen-Dachmodul **(10)** aufweist
- ein oben geschlossenes und unten offenes Dachmodul-Gehäuse **(9)** mit einem Dachelement (**9**b), Wandelementen (**9**c) und einer Öffnung (**9**a) in der Unterseite,
- einen im Inneren des Dachmodul-Gehäuses **(9)** angeordneten Montageträger (**6**), der insbesondere im Wesentlichen horizontal angeordnet ist,
- wenigstens eine Montage-Vorrichtung (**6**a), die insbesondere Bestandteil des Montageträgers **(6)** ist, zum Befestigen einer Antenne **(4)** an dem Montageträgers **(6),**
- eine Arretier-Vorrichtung **(11)** zum Befestigen des Dachmodul-Gehäuses **(9)** an einem umgebenden Bauteil, insbesondere einem dachlosen Verteilerschrank **(40).**

2. Antennen-Dachmodul nach Anspruch **1,**
**dadurch gekennzeichnet, dass**
der Montageträger **(6)** eine ebene Montageplatte **(6)** oder eine nach unten hin offene Montagewanne **(6)** mit einem insbesondere am unteren Rand nach außen vorstehenden Flansch (**12**b) ist,
und/oder
eine Fixier-Vorrichtung **(12),** die insbesondere Bestandteil des Dachmodul-Gehäuses **(9)** ist, zum Fixieren der Montageplatte **(6)** an dem Dachmodul-Gehäuse **(9)** vorhanden ist.

3. Antennen-Dachmodul nach einem der vorhergehenden Ansprüche,
**dadurch gekennzeichnet, dass**
die Arretier-Vorrichtung **(11)** vom Dachmodul-Gehäuse **(9),** insbesondere in den Eckbereichen, nach unten vorstehende Arretier-Zapfen **(11**a) umfasst.

4. Antennen-Dachmodul nach einem der vorhergehenden Ansprüche,
**dadurch gekennzeichnet, dass**
der von der Montageplatte **(6)** einerseits und dem Dachmodul-Gehäuse **(9)** andererseits begrenzte Antennenraum (**9**d) ausreichend groß, insbesondere in der Höhe, ist, so dass darin eine Antenne **(4)** angeordnet werden kann und/oder
das Dachmodul-Gehäuse **(9)** größtenteils, zu mindestens **90** % seiner Fläche, aus einem für Funk-Wellen durchlässigen Material, insbesondere aus Kunststoff, besteht.

5. Antennen-Dachmodul nach einem der vorhergehenden Ansprüche,
**dadurch gekennzeichnet, dass**
die Fixier-Vorrichtung **(12)** einen von wenigstens einem der Wandelemente (**9**c) nach innen ragenden Anschlag **(13),** insbesondere einen entlang der Innenseite der Wandelemente (**9**c) umlaufenden Zwischenrahmen **(13),** aufweist und die Montageplatte **(6)** an der Unterseite des Anschlages **(13)** anliegt und so gestaltet ist, dass sie durch die untere Öffnung (9a) des Dach Modul-Gehäuse **(9)** in dieses einführbar ist.

6. Antennen-Dachmodul nach einem der vorhergehenden Ansprüche,
**dadurch gekennzeichnet, dass**
- wenigstens eines der Wandelemente (**9**c) in seinem unteren Höhenbereich Luftdurchtritts-Öffnungen (**14**a), insbesondere in Form von Kiemenöffnungen, aufweist und
- die Montageplatte **(6)** oberhalb der Luftdurchtritts-Öffnungen (**14**a) angeordnet ist.

7. Antennen-Dachmodul nach einem der vorhergehenden Ansprüche,
**dadurch gekennzeichnet, dass**
wenigstens eine Antenne **(4)** vorhanden ist, insbesondere auf der Oberseite des Montageträgers **(6).**

8. Antennen-Dachmodul nach einem der vorhergehenden Ansprüche,
**dadurch gekennzeichnet, dass**
eine Antennen-Elektronik **(5)** vorhanden ist sowie eine Befestigungs-Vorrichtung (**7**a) mit der die Antennen-Elektronik **(5)** in dem Dachmodul-Gehäuse **(9)** oder an der Montageplatte **(6)** befestigt ist und/oder
ein Kabelsatz (**8**a) vorhanden ist, welcher die Antenne **(4)** mit der Antennen-Elektronik **(5)** verbindet und/oder die Antennen-Elektronik **(5)** mit einer Stromquelle verbinden kann.

9. **Antennen-Nachrüst-Baukasten** zum Nachrüsten einer Antenne **(4)** in einem Verteilerschrank **(100),** wobei der Antennen-Nachrüst-Baukasten mehrere Baukasten-Elemente umfasst, nämlich:
- als erstes Baukasten-Element wenigstens eine Sorte von oben geschlossenen und unten offenen Dachmodul-Gehäusen **(9)** mit je einem Dachelement (**9**b), Wandelementen (**9**c) und einer Öffnung (**9**a) in der Unterseite,
- als zweites Baukasten-Element wenigstens eine Sorte eines ins Inneren des Dachmodul-Gehäuses **(9)** hinein passenden oder ins Dachmodul-Gehäuses integrierten, im Wesentlichen horizontal angeordneten, Montageträgers **(6),** mit einer Montage-Vorrichtung (**6**a) zum daran Montieren wenigstens einer Antenne **(4),**
- als drittes Baukasten-Element wenigstens eine Sorte von Arretier-Vorrichtungen **(11)** zum Arretieren des Dachmodul-Gehäuses **(9)** an einem umgebenden Bauteil, insbesondere einem dachlosen Verteilerschrank **(40),**
und von wenigstens einem der Baukasten-Elemente im Baukasten mehrere Sorten vorhanden sind.

10. Antennen-Nachrüst-Baukasten nach Anspruch **11,**
**dadurch gekennzeichnet, dass**
als weitere Baukasten-Elemente
- wenigstens eine Sorte von Antennen **(4)** und/oder
- wenigstens eine Sorte einer Antennen-Elektronik **(5)** zum Betreiben der Antenne **(4)** und/oder
- wenigstens eine Sorte eines Kabel-Satzes (**8**a), der die Antenne **(4)** elektrisch einerseits mit der Antennen-Elektronik **(5)** und andererseits mit einer Stromquelle **(19)** verbinden kann
vorhanden ist.

11. Antennen- Nachrüst-Baukasten nach einem der Ansprüche **11** bis **12, dadurch gekennzeichnet, dass** als weitere Baukasten-Elemente
- eine Befestigungs-Vorrichtung (**7**a), mit der die Antennen-Elektronik **(5)** in dem Dachmodul-Gehäuse **(9)** oder an der Montageplatte **(6)** befestigt werden kann,
und/oder
- eine Befestigungs-Vorrichtung (**7**b) mit der die Antennen-Elektronik **(5)** in dem in dem Hauptraum **(101')** eines Verteilerschrankes **(100)** befestigt werden kann,
und/oder
- eine Befestigungs-Vorrichtung (**7**c) mit der die Antennen-Elektronik **(5)** in dem Zufuhrraum **(102')** eines Verteilerschrankes **(100)** befestigt werden kann,
vorhanden ist.

12. Antennen- Nachrüst-Baukasten nach einem der Ansprüche **11** bis **13, dadurch gekennzeichnet, dass** der Antennen-Nachrüst-Baukasten mehrere Sorten von Dachmodul-Gehäusen **(9)** umfasst, die sich unterscheiden hinsichtlich
- ihrer in der Aufsicht betrachteten Grundfläche und/oder
- ihrer Höhe und/oder
- ihrer in der Seitenansicht betrachteten Form des Dach-Elementes (**9**b), und/oder
- der Höhen-Lage des Montage-Trägers **(6)** im Dachmodul-Gehäuse und/oder
- des Vorhandenseins oder Fehlens von Luftdurchtritts-Öffnungen (**14**a), insbesondere in Form von Kiemenöffnungen, im insbesondere unteren Bereich der Wand-Elemente (**9**c) des Dachmodul-Gehäuses **(9).**

13. Antennen- Nachrüst-Baukasten nach einem der Ansprüche **11** bis **14,**
**dadurch gekennzeichnet, dass**
als weitere Baukasten-Elemente
der Antennen-Nachrüst-Baukasten mehrere Sorten von Antennen (**4**a, b, c) umfasst, die sich unterscheiden hinsichtlich
- ihrer Gestalt, insbesondere ihrer Höhe, und/oder
- der Gestalt und Größe ihres Abstrahlkegels **(15),** und/oder
- der Intensität der von ihr abgegebenen Strahlung.

14. Antennen-Nachrüst-Baukasten nach einem der Ansprüche **11** bis **15,**
**dadurch gekennzeichnet, dass**
der Antennen-Nachrüst-Baukasten als weitere Baukastenelemente mehrere Sorten von Antennen-Elektroniken (**5**a, b) umfasst, insbesondere passend zu den unterschiedlichen Antennen (**4**a, b, c)
und/oder
der Antennen-Nachrüst-Baukasten als weitere Baukastenelemente wenigstens eine Sorte von Fixier-Vorrichtungen, die insbesondere Bestandteil des Dachmodul-Gehäuses **(9)** ist, zum Fixieren des Montageträgers **(6)** an dem Dachmodul-Gehäuse **(9)** umfasst.

15. Antennen- Nachrüst-Baukasten nach einem der Ansprüche **11** bis **17,**
**dadurch gekennzeichnet, dass**
der Antennen-Nachrüst-Baukasten als weitere Baukastenelemente mehrere Sorten von Montage-Trägern **(6)** umfasst, insbesondere in Form von Montage-Platten **(6)** oder nach insbesondere unten offenen Montage-Wannen **(6),** insbesondere in der Grösse passend zu den unterschiedlichen Dachmodul-Gehäusen **(9).**

16. Antennen-Nachrüst-Baukasten nach einem der Ansprüche **11** bis **18,**
**dadurch gekennzeichnet, dass**
als weitere Baukasten-Elemente mehrere Sorten von Kabel-Sätzen (**8**a, b, c) vorhanden sind, insbesondere passend zu den unterschiedlichen Befestigungs-Vorrichtungen (**7**a, b, c) und/oder zu den unterschiedlichen Antennen (**4**a, b, c) und/oder zu den unterschiedlichen Antennen-Elektroniken (**5**a, b).

17. **Antennenschrank-Baukasten** umfassend
- einen Antennen-Nachrüst-Baukasten gemäß einem der vorhergehenden Ansprüche **11** - **19**
- sowie einen Verteilerschrank-Baukasten mit Verteilerschrank-Elementen, nämlich:
- als erstes Verteilerschrank-Element wenigstens einer Sorte von Sockel-Elementen **(103),**
- als zweites Verteilerschrank-Element wenigstens einer Sorte eines Verteilerschrank-Unterteiles **(102),** insbesondere passend zu der wenigstens einen Sorte von Sockel-Elementen **(103),**
- als drittes Verteilerschrank-Element wenigstens einer Sorte eines Verteilerschrank-Oberteiles **(101**), insbesondere passend zu der wenigstens einen Sorte eines Verteilerschrank-Unterteiles **(102),**
- insbesondere als viertes Verteilerschrank-Element wenigstens einer Sorte einer Bodenplatte **(43)** als Trennung zwischen dem Zufuhrraum **(102')** des Verteilerschrank-Unterteiles **(102)** und dem Hauptraum **(101')** des Verteilerschrank-Oberteiles
und von wenigstens einem der Verteilerschrank-Elemente im Baukasten mehrere Sorten vorhanden sind.

18. Antennenschrank-Baukasten nach Anspruch **20,**
**dadurch gekennzeichnet, dass**
das Sockel-Element **(103)** und/oder das Verteilerschrank-Unterteil **(102)** und/oder das Verteilerschrank-Oberteil **(101)** aufweist
- wenigstens eine Sorte eines Traggestells (**101**a, **102**a, **103**a) oder einen Traggestell-Baukasten,
- wenigstens eine Sorte von Außen-Beplankungs-Paneelen (**45**a, b),
- insbesondere wenigstens einer Sorte von Klima-Modulen **(44),**
- insbesondere wenigstens eine Sorte von Innen-Beplankungs-Paneelen (**46**a, b).
